# EUROPEAN PATENT APPLICATION

(11) **EP 1 128 275 A2**
(43) Date of publication of application: **29.08.2001**
(21) Application number: 01301430.3
(22) Date of filing: 19.02.2001
(51) Int. Cl.: G06F 15/17

(54) **Method and apparatus for controlling multiple processors using a serial bus**

(30) Priority: 28.02.2000 US 513862
(71) Applicant: LUCENT TECHNOLOGIES INC., Murray Hill, New Jersey 07974-0636 (US)
(72) Inventor: Hartung, John, Warren, NJ 07059 (US)
(74) Representative: Watts, Christopher Malcolm Kelway, Dr.

(57) **Abstract**

A method and apparatus are disclosed for controlling processors in such a multiple processor computer system using a serial chain configuration. A serial interconnection bus is daisy-chained among all of the processors in a multiple processor environment to transfer data from a master processor to one or more slave processors in the serial chain. The master processor has an associated non-volatile memory and volatile memory, and the slave processors contain only volatile memory. The programs and data required by each processor are transferred from the non-volatile memory of the master processor into specified areas of the volatile memories of the daisy-chained slave processors using subsequent serial transfers, following a system start-up or reset. Instructions are provided for addressing and controlling the execution of the slave processors. The protocol for transferring program or data includes a transfer count (shift counter) to reduce the overhead associated with the transfer.

## Description

### Field Of The Invention

The present invention relates to multiple processor computer systems, and more particularly to methods and apparatus for controlling processors in such a multiple processor computer system.

### Background Of The Invention

In a multiprocessor computer system, multiple processes execute concurrently on multiple processors. These processors often share resources, such as memory and input/output devices. When using multiple processors in an application, each processor typically must have its own dedicated non-volatile copy of the programs and data that are used for execution of its functions, or a memory containing this information that is shared with another processor. In addition, each processor must have the necessary hardware so that the processor can coordinate its startup with the other processors to obtain the required data from the dedicated or shared memory, and begin execution of its operating system and application software.

While such conventional techniques for controlling processors in such a multiple processor computer system have performed satisfactorily for most applications, they suffer from a number of limitations which, if overcome, could expand the utility of such multiple processor computer systems. Specifically, for embodiments where a dedicated non-volatile copy of the programs and data is provided for each processor, the cost of such a dedicated memory is prohibitive. Likewise, for embodiments where the required programs and data are provided to each processor using a shared memory architecture, an access control mechanism must be provided to allow only one processor to access the shared memory at a given time.

A need therefore exists for methods and apparatus for reducing the cost or complexity (or both) of using multiple processors in an apparatus by providing a method and apparatus for sharing a single copy of non-volatile memory among all the processors without providing a shared memory architecture. A further need exists for methods and apparatus for controlling the coordination of all processors when accessing the non-volatile memory and beginning execution of their functions.

### Summary Of The Invention

Generally, a method and apparatus are disclosed for controlling processors in a multiple processor computer system using a serial chain configuration. The present invention uses a serial interconnection bus that is daisy-chained among all of the processors in a multiple processor environment to transfer data from a master processor to one or more slave processors in the serial chain. The master processor has an associated non-volatile memory and volatile memory, and the slave processors contain only volatile memory.

The programs and data required by each processor are transferred from the non-volatile memory of the master processor into specified areas of the volatile memories of the daisy-chained slave processors using subsequent serial transfers, following a system start-up or reset. In addition, the disclosed command protocol includes instructions for addressing and controlling the execution of the slave processors. The protocol for transferring program or data includes a transfer count (shift counter) to reduce the overhead associated with the transfer. In one embodiment, the serial protocol allows (i) the transfer of program and data memory from the non-volatile memory associated with the master processor to the volatile memories associated with the slave processors, and (ii) the control of the downloaded programs by the master processor (or boot hardware in an alternate embodiment). Synchronization of messages among all processors is accomplished by a global serial interface reset that identifies the first bit of the first protocol word that is transferred subsequently.

Generally, three commands are used to transfer data and begin execution of processors in the serial chain. The first command loads a destination address in the target processor, and the next word contains the data to be loaded at that address. The second command loads the program start address into the program counter of the target processor, and the third command begins execution.

A more complete understanding of the present invention, as well as further features and advantages of the present invention, will be obtained by reference to the following detailed description and drawings.

### Brief Description Of The Drawings

FIG. 1 illustrates a multiprocessor computer system in which the present invention can operate;
FIG. 2 is a schematic block diagram of an exemplary master processor 110 shown in FIG. 1;
FIG. 3 is a schematic block diagram of an exemplary slave processor 120 shown in FIG. 1;
FIGS. 4A and 4B, collectively, are a flow chart describing an exemplary process performed by the controller shown in FIG. 2; and
FIGS. 5A through 5D, collectively, are a flow chart describing an exemplary process performed by the controller shown in FIG. 3.

### Detailed Description

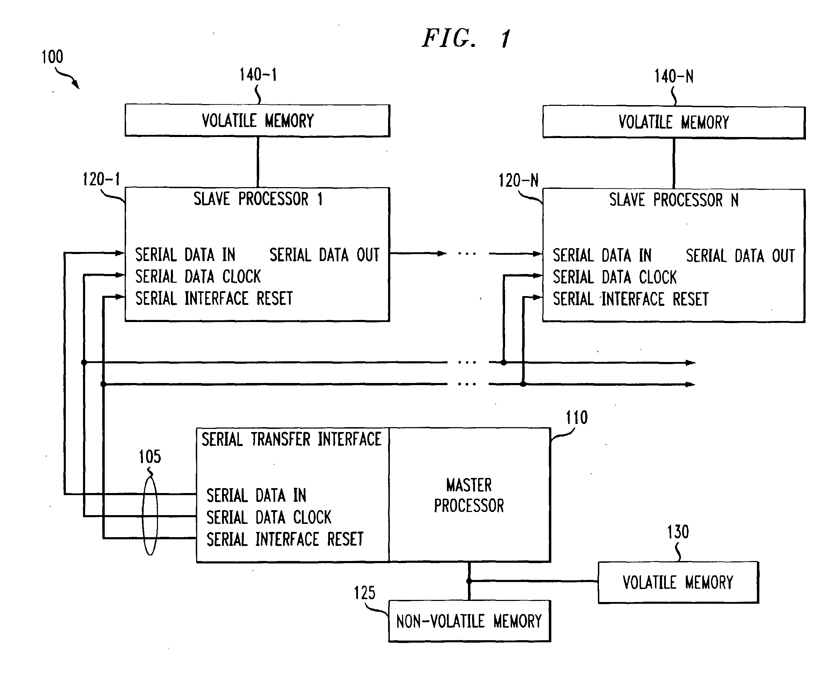

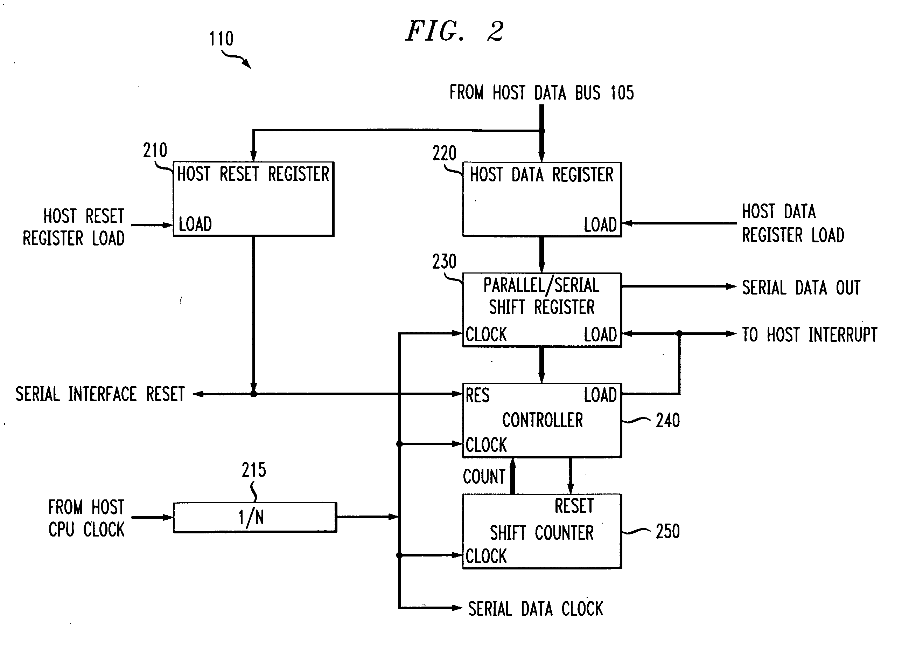

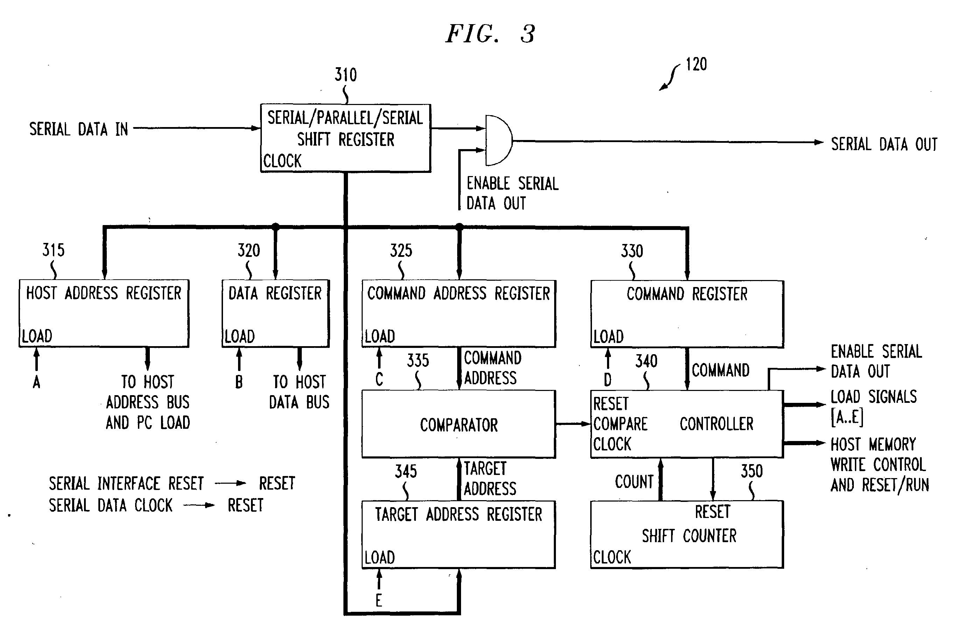

FIG. 1 illustrates a multiprocessor computer system in which the present invention can operate. As shown in FIG. 1, the present invention uses a serial interconnection bus 105, which is daisy-chained among all of the processors 110, 120-1 through 120-N in the multiple processor environment 100, to transfer data from a master processor 110, discussed further below in conjunction with FIG. 2, to one or more slave processors 120-1 through 120-N (hereinafter, collectively referred to as slave processors 120), discussed further below in conjunction with FIG. 3, in the serial chain. As shown in FIG. 1, the serial-data-out port of each processor 110, 120 is connected to the serial-data-in port of the next processor 120 in the serial chain. In addition, the serial-data-clock and serial-interface-reset outputs of the master processor 110 are connected in series to the serial-data-clock and serial-interface-reset inputs of each slave processor 120 in the serial chain.

The master processor 110 has an associated non-volatile memory 125 and volatile memory 130, and the slave processors 120-1 through 120-N contain only volatile memory 140-1 through 140-N, respectively (hereinafter, collectively referred to as volatile memories 140). As discussed further below in a section entitled Illustrative Serial Protocol, the present invention uses a command protocol on the serial bus 105 that controls the transfer of data from the non-volatile memory 125 of the master processor 110 into selected areas of the volatile memories 140 of the daisy-chained slave processors 120 via subsequent serial transfers. In addition, the command protocol includes instructions for addressing and controlling the execution of the daisy-chained processors 120.

### ILLUSTRATIVE SERIAL PROTOCOL

The illustrative embodiment uses a minimal serial protocol that allows (i) the transfer of program and data memory from the non-volatile memory 125 associated with the master processor 110 to the volatile memories 140-1 through 140-N associated with the daisy-chained processors 120-1 through 120-N, respectively, and (ii) the control of the downloaded programs by the master processor 110 (or boot hardware in an alternate embodiment). Synchronization of messages among all processors 110 is accomplished by a global serial interface reset that identifies the first bit of the first protocol word transferred subsequently.

Each serial transfer of one or more control and data words begins with a destination processor address that is initialized in the serial chain after the reset. Each processor 110 receives an address command followed by the initialize address command. After receiving this command, subsequent initialize processor commands are passed to the following processor 120 in the chain. In other words, if a processor 120 has already been assigned an address subsequent addresses are passed along in the serial daisy chain. In this manner, all processors 120 receive their identifying address. All subsequent commands can then be preceded by the assigned destination address and command word.

Three commands are needed to transfer data and begin execution of processors 120 in the serial chain. The first command loads a destination address in the target processor, and the next word contains the data to be loaded at that address. The second command loads the program start address into the program counter of the destination processor, and the remaining command begins execution. All processors are held in a reset state when the reset is asserted to allow the serial boot logic to access the host memory and registers. In a further variation, the protocol for transferring program or data includes a transfer count to reduce the overhead associated with the transfer.

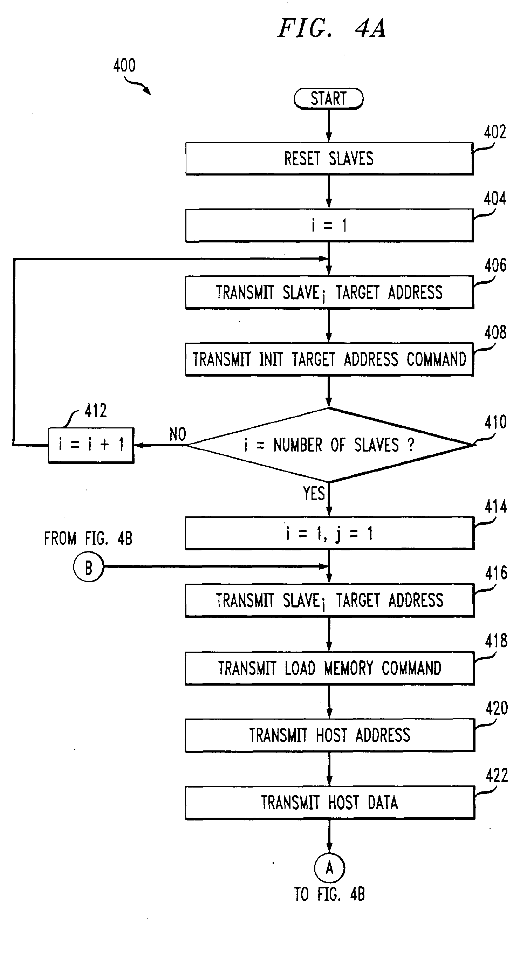

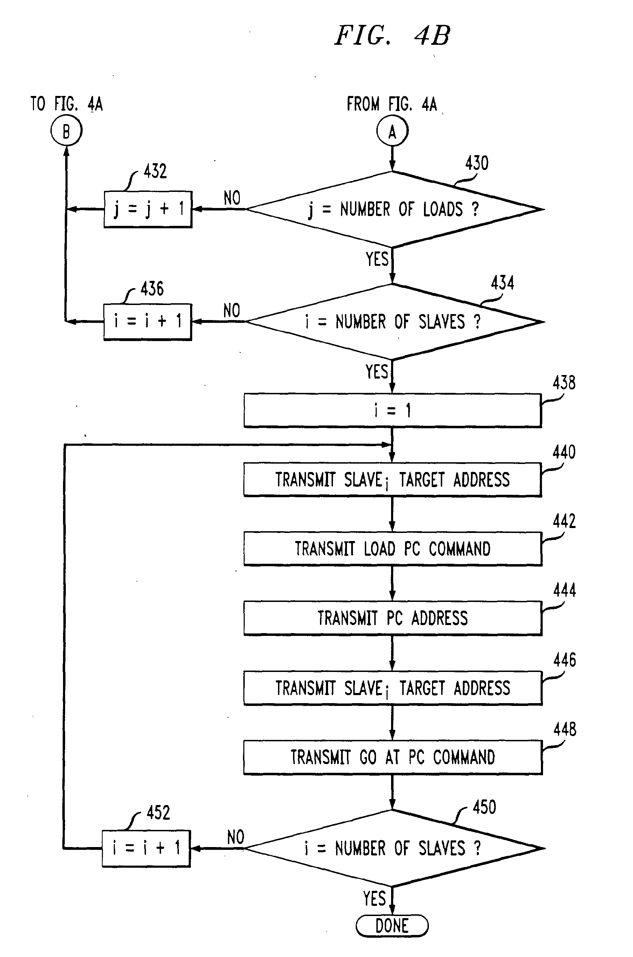

FIG. 2 is a schematic block diagram of an exemplary master processor 110 shown in FIG. 1. As shown in FIG. 2, the master processor 110 includes a number of well-known registers, including a host reset register 210, a host data register 220 and a parallel/serial shift register 230. Generally, data that is received by the host data register 220 is loaded and clocked out on the serial chain using the serial-data-out port. In addition, the master processor 110 includes a controller 240, whose operation is discussed further below in conjunction with the processes described in FIGS. 4A and 4B. A shift counter 250 is used to identify when complete words are shifted out from the parallel/serial register 230. A clock signal is divided at stage 215 to obtain a desired period, and the periodic signal is applied to the parallel/serial shift register 230, controller 240 and shift counter 250, as well as the serial-data-clock port.

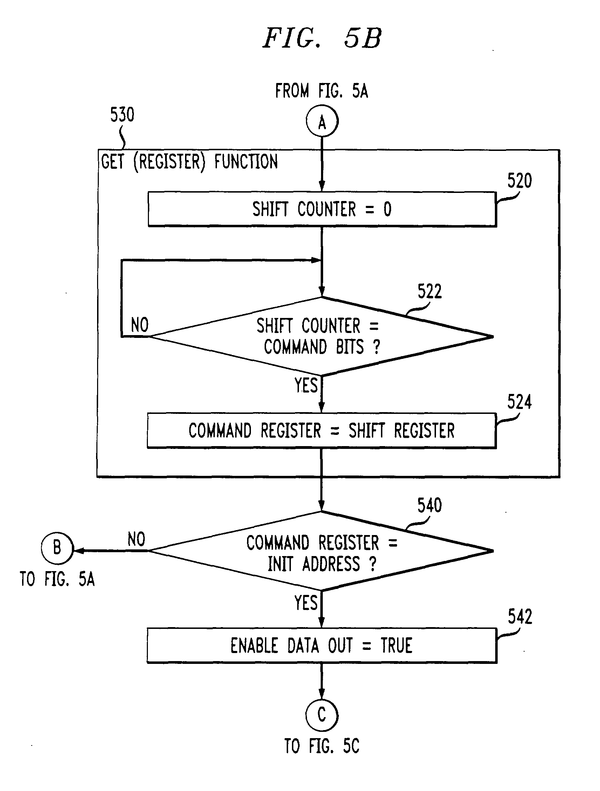

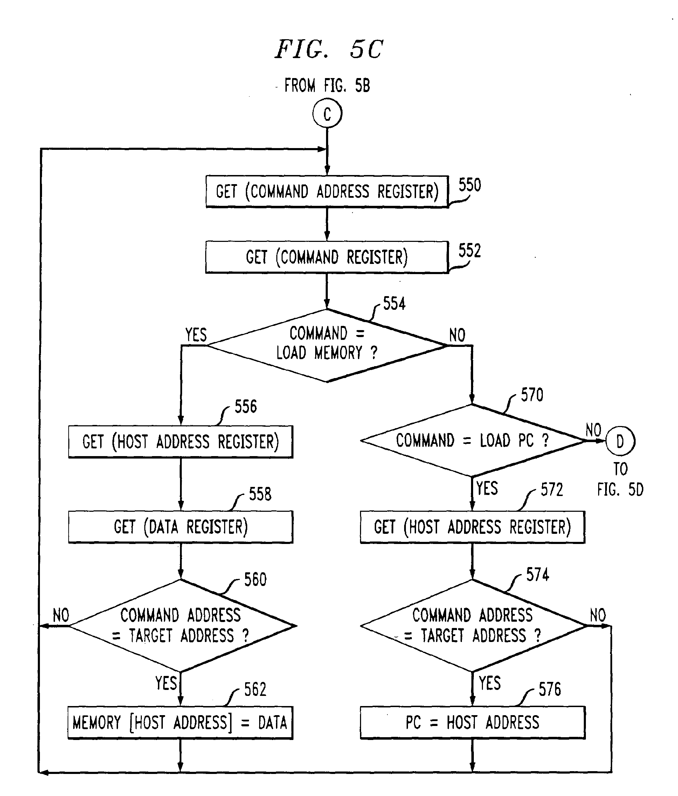

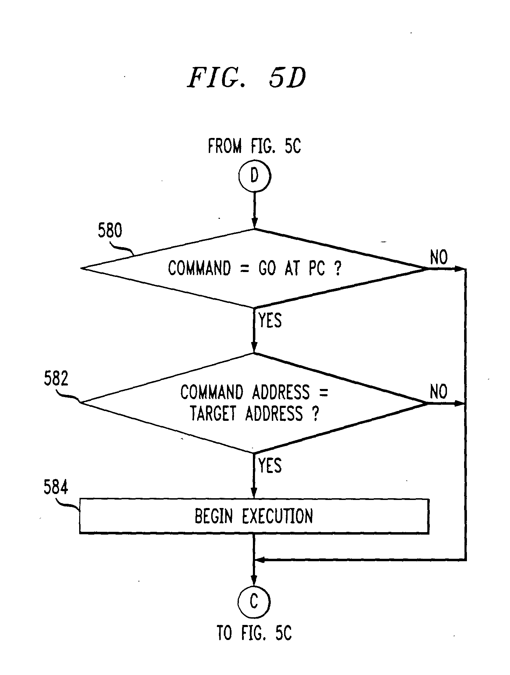

FIG. 3 is a schematic block diagram of an exemplary slave processor 120 shown in FIG. 1. As shown in FIG. 3, the exemplary slave processor 120 includes a number of well-known registers, including a serial/parallel/serial shift register 310, a host address register 315, a data register 320, a command address register 325, a command register 330 and a target address register 345. Generally, data that is received by the serial/parallel/serial shift register 310 on the serial-data-in port is loaded and clocked into the appropriate register 315, 320, 325, 330, 345, as complete words are received (indicated by the shift counter 350). If a comparator 335 determines that the address in the target address register 345 matches the command address from the command address register 325, then the received command is intended for the slave processor 120, and triggers the controller 340 to process the received command. The operation of the controller 340 is discussed further below in conjunction with the processes described in FIGS. 5A through 5D. A shift counter 350 is used to identify when complete words are shifted into the command register 330.

FIGS. 4A and 4B, collectively, are a flow chart describing an exemplary process 400 performed by the controller 240 of the master processor 110 shown in FIG. 2. As shown in FIG. 4A, the master processor 110 initially resets all of the slave processors 120 during step 402 and then transmits the slave addresses during steps 406 through 412. Thus, a slave counter, i, is initialized to a value of one (1) during step 404. The target address of the current slave processor 120 is transmitted during step 406, followed by an initialize target address command during step 408.

A test is performed during step 410 to determine if the counter, i, is equal to the total number of slave processors 120 in the multiple processor environment 100. If it is determined during step 410 that the counter, i, is not equal to the total number of slave processors 120, then at least one additional slave has not yet received its address and program control proceeds to step 412 where the counter, i, is incremented.

If, however, it is determined during step 410 that the counter, i, is equal to the total number of slave processors 120, then each slave has received its address and program control proceeds to step 414. During steps 414 through 436 (FIG. 4B), the process 400 loads the data from the non-volatile memory 125 into specified portions of the volatile memory 140 of each slave processor 120. Thus, during step 414 the slave counter, i, is again initialized to a value of one (1), and a counter, j, indicating the number of loads, is also initialized to a value of one (1).

The target address of the current slave processor 120 is transmitted during step 416, followed by a load memory command during step 418. Thereafter, the host address (indicating a specific portion of the volatile memory 140 of the current slave processor 120) is transmitted during step 420, followed by the host data during step 422. A test is performed during step 430 to determine if the counter, j, is equal to the total number of loads that are required. If it is determined-during step 430 that the counter, j, is not yet equal to the total number of loads that are required, then counter, j, is incremented during step 432 and program control returns to step 416 to process the remaining loads for the current slave processor 120.

If, however, it is determined during step 430 that the counter, j, is equal to the total number of loads that are required, then program control proceeds to step 434 where a test is performed to determine if the counter, i, is equal to the total number of slave processors 120 in the multiple processor system 100. If it is determined during step 434 that the counter, i, is not yet equal to the total number of slaves, then the counter, i, is incremented during step 436 and program control returns to step 416 to process any remaining slave processors 120. If, however, it is determined during step 434 that the counter, i, is equal to the total number of slaves, then all of the slaves have been loaded, and program control proceeds to step 438.

The slave counter, i, is again initialized to a value of one (1) during step 438. The target address of the current slave processor 120 is transmitted during step 440, followed by a load program counter (PC) command during step 442. Thereafter, the PC address is transmitted during step 444, followed by the target address of the slave during step 446 and the "go at PC" command during step 448. A test is performed during step 450 to determine if the counter, i, is equal to the total number of slaves. If it is determined during step 450 that the counter, i, is not yet equal to the total number of slaves, then counter, i, is incremented during step 452 and program control returns to step 440 to process the remaining slave processors 120. If, however, it is determined during step 450 that the counter, i, is equal to the total number of slaves, then program control terminates.

FIGS. 5A through 5D, collectively, are a flow chart describing an exemplary process 500 performed by the controller 340 of the exemplary slave processor 120 shown in FIG. 3. As shown in FIG. 5A, the slave processor 120 initially continuously performs a test during step 502 until a reset is received on the serial-interface-reset port from the master processor 110. Once a reset is detected during step 502, the slave processor 120 expects to receive a target address. The shift counter 350 is initialized during step 504 to zero (0) and the serial-data-out port is disabled during step 506 (and will remain disabled until the current slave processor 120 receives its target address).

A test is performed during step 508 to determine if the value of the shift counter 350 is equal to the number of target address bits. Step 508 is continuously performed until the value of the shift counter 350 equals the number of target address bits, indicating that a complete target address has been received. Once a complete target address has been received, the value from the shift register 310 is loaded into the target address register 345 during step 510.

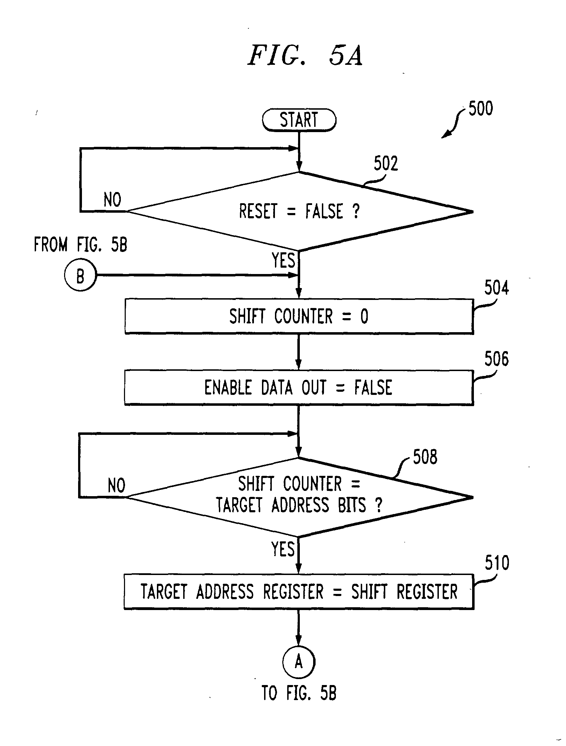

A get (register) function 530 is shown in FIG. 5B and provides a template for the execution of steps 550, 552, 556, 558 and 572, discussed below. As shown in FIG. 5B, the get (register) function 530 comprises the steps of initializing the shift counter 350 to zero (0) during step 520, performing a test during step 522 until the shift counter is equal to the number of command bits, and then loading the value from the shift register 310 into the command register 330 during step 524.

A test is performed during step 540 to determine if the command that has been loaded into the command register 330 in the previous step is an initialize address command. If it is determined during step 540 that the command in the command register 330 is not an initialize address command, then program control returns to step 504. If, however, it is determined during step 540 that the command in the command register 330 is an initialize address command, then program control proceeds to step 542, where the serial-data-output is again enabled to permit subsequent target addresses to be provided to subsequent slave processors 120 in the serial chain.

A get (command address register) command is performed during step 550, using the Get template 530, that will load the command address register 325 once the shift counter 350 indicates the complete command address has been received. A get (command register) command is performed during step 552 that will load the command register 330 once the shift counter 350 indicates the complete command has been received.

A test is performed during step 554 to determine if the command that has been loaded into the command register 330 in the previous step is a load memory command. If it is determined during step 554 that the command in the command register 330 is a load memory command, then program control proceeds to step 556. A get (host address register) command is performed during step 556, using the Get template 530, that will load the host address register 315 once the shift counter 350 indicates the complete host address has been received. A get (data register) command is performed during step 558 that will load the data register 320 once the shift counter 350 indicates a complete data word has been received.

A test is performed during step 560 to determine if the command address that has been loaded into the command address register 325 equals the received target address stored in the target address register 345. If it is determined during step 560 that the command address equals the received target address, then the data is stored in the volatile memory 140 at the indicated host address during step 562. Program control then returns to step 550 to process any further received commands.

If, however, it is determined during step 560 that the command address does not equal the received target address, then program control returns to step 550 to process any further received commands.

If, however, it was determined during step 554 that the command in the command register 330 is not a load memory command, then program control proceeds to step 570, where a further test is performed to determine if the command in the command register 330 is a load Program Counter (PC) command. If it is determined during step 570 that the command in the command register 330 is a load Program Counter (PC) command, then a get (host address register) command is performed during step 572, using the Get template 530, that will load the host address register 315 once the shift counter 350 indicates the complete host address has been received.

A test is performed during step 574 to determine if the command address that has been loaded into the command address register 325 equals the received target address stored in the target address register 345. If it is determined during step 574 that the command address equals the received target address, then the received host address is stored in the program counter (PC) during step 576. Program control then returns to step 550 to process any further received commands. If, however, it is determined during step 574 that the command address does not equal the received target address, then program control returns to step 550 to process any further received commands.

If, however, it was determined during step 570 that the command in the command register 330 is not a load Program Counter (PC) command, then program control proceeds to step 580 (FIG. 5D). A test is performed during step 580 to determine if the command that has been loaded into the command register 330 is a "go at PC" command. If it is determined during step 580 that the command is not the "go at PC" command then program control then returns to step 550 to process any further received commands. If, however, it is determined during step 580 that the command is the "go at PC" command, then a further test is performed during step 582 to determine if the command address that has been loaded into the command address register 325 equals the received target address stored in the target address register 345. If it is determined during step 582 that the command address equals the received target address, then execution of the application begins during step 584. Program control then returns to step 550 to process any further received commands. If, however, it is determined during step 582 that the command address does not equal the received target address, then program control returns to step 550 to process any further received commands.

It is to be understood that the embodiments and variations shown and described herein are merely illustrative of the principles of this invention and that various modifications may be implemented by those skilled in the art without departing from the invention.

## Claims

1. A method for controlling a plurality of processors in a multiple processor environment, said plurality of processors including a master processor and at least one slave processor, said method comprising the steps of:
providing a non-volatile memory associated with said master processor, said non-volatile memory storing data used by said master processor and said at least one slave processor; and
transferring data from said non-volatile memory to said at least one slave processor.

2. The method of claim 1, wherein said transferring step is performed using a serial interface.

3. The method of claim 1 or claim 2, wherein each said at least one slave processor has an associated volatile memory and said transferring step further comprises the step of transferring said data from said non-volatile memory into said volatile memory associated with said at least one slave processor.

4. The method of any of the preceding claims, further comprising the step of assigning an address to each of said slave processors.

5. The method of any of the preceding claims, further comprising the step of assigning addresses to each of said slave processors following a reset.

6. The method of any of the preceding claims, wherein said master processor controls the execution of said slave processors.

7. The method of any of the preceding claims, wherein said master processor initiates the execution of said slave processors.

8. The method of any of the preceding claims, wherein said transferring step includes a transfer count to reduce the overhead associated with said transfer.

9. The method of any of the preceding claims, further comprising the step of synchronizing messages among said plurality of processors using a global serial interface reset.

10. The method of claim 9, wherein said global serial interface reset identifies the first bit of the first protocol word that is transferred subsequently.

11. A multiple processor computing system, comprising:
a plurality of processors having a corresponding volatile memory;
a serial interface for connecting said plurality of processors; and
a non-volatile memory associated with a particular one of said processors, said non-volatile memory containing programs and data required by said plurality of processors, wherein said programs and data are transferred from said non-volatile memory to said volatile memories.

12. The multiple processor computing system of claim 11, wherein said transfer programs and data is performed using a serial interface.

13. The multiple processor computing system of claim 11 or claim 12, wherein said processor having said associated non-volatile memory controls the execution of said remaining processors.

14. The multiple processor computing system of any of claims 11 to 13, wherein said processor having said associated non-volatile memory initiates the execution of said remaining processors.

15. The multiple processor computing system of any of claims 11 to 14, wherein messages among said plurality of processors are synchronized using a global serial interface reset.

16. The multiple processor computing system of claim 15, wherein said global serial interface reset identifies the first bit of the first protocol word that is transferred subsequently.
